(19) Europäisches Patentamt
European Patent Office
Office européen des brevets

(11) Veröffentlichungsnummer: **0 069 257**
**B1**

(12) **EUROPÄISCHE PATENTSCHRIFT**

(45) Veröffentlichungstag der Patentschrift: **26.09.84**

(51) Int. Cl.³: **C 09 K 3/34**, C 07 C 97/18, C 09 B 57/00, G 02 F 1/137

(21) Anmeldenummer: **82105318.8**

(22) Anmeldetag: **18.06.82**

(54) **Flüssigkristallines Dielektrikum und elektrooptisches Anzeigeelement.**

(30) Priorität: **02.07.81 DE 3126108**

(43) Veröffentlichungstag der Anmeldung: **12.01.83 Patentblatt 83/02**

(45) Bekanntmachung des Hinweises auf die Patenterteilung: **26.09.84 Patentblatt 84/39**

(84) Benannte Vertragsstaaten: **CH DE FR IT LI NL SE**

(56) Entgegenhaltungen:
**CH-A- 607 078**
**DE-B- 1 234 893**
**US-A- 2 553 049**
**JOURNAL OF ORGANIC CHEMISTRY, Band 36, 1971 STANLEY BLOOM ET AL. "Tautomerismin 1,5-Dianilino-4-8-naphtoquinones", Seiten 235-237**

(73) Patentinhaber: **Merck Patent Gesellschaft mit beschränkter Haftung**
**Frankfurter Strasse 250**
**D-6100 Darmstadt (DE)**

(72) Erfinder: **Haas, Günther, Dr.**
**Saarstrasse 109**
**D-6903 Neckargemünd (DE)**
Erfinder: **Weber, Georg**
**Wilhelm-Leuschner-Strasse 38**
**D-6106 Erzhausen (DE)**

**EP 0 069 257 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft flüssigkristalline Dielektrika für auf der Basis des Guest-Host-Effekts arbeitende elektro-optische Anzeigeelemente mit einem Gehalt an einem oder mehreren pleochroitischen Naphthochinonfarbstoffen.

Bei elektrooptischen Anzeigeelementen mit flüssigkristallinen Dielektrika ist es bekannt, den elektrooptischen Effekt der Anzeige durch Einlagerung von dichroitischen oder pleochroitischen Farbstoffen als sogenannte « Gast-Phase » in einer flüssigkristallinen Matrix als sogenannte « Wirt-Phase » zu erzeugen (G. H. Heilmeier et al, Molecular Crystals and Liquid Crystals, Band 8 (1969), Seiten 293-304). Die Farbstoffmoleküle der Gast-Phase werden hierbei von der einbettenden Wirt-Phase, in der sie gelöst bzw. verteilt sind, entsprechend dem anliegenden elektrischen Feld orientiert und zeigen wegen ihrer pleochroitischen Eigenschaften je nach Orientierung eine unterschiedliche Lichtabsorption. Im Unterschied zu normalen monochroitischen Farbstoffen hängt die von pleochroitischen Farbstoffen absorbierte Lichtmenge von der Orientierung ihrer Moleküle zum elektrischen Feldvektor des einfallenden Lichtes ab. Durch Anlegen eines elektrischen Feldes an das in einer Zelle als dünne Schicht verteilte Dielektrikum werden die nematischen Flüssigkristalle der Wirt-Phase und zusammen mit diesen die als Gast-Phase eingelagerten pleochroitischen Farbstoffe umorientiert, was zu einer Änderung der Lichtabsorption führt. Die praktische Anwendung dieser in der Literatur als Guest-Host-Effekt bezeichneten Technik ist z. B. in der DE-OS 1 928 003 beschrieben. Als Beispiele von pleochroitischen bzw. dichroitischen Farbstoffen sind dort Indophenolblau, Indigoderivate, Azofarbstoffe und dergleichen beschrieben. Die dabei erzielbaren Kontraste sind nur bei Verwendung einer Polarisationsfolie für eine gute Lesbarkeit ausreichend.

Gemäß einer neueren Entwicklung, wie sie z. B. in der DE-OS 2 410 557 beschrieben ist, kann auf Polarisatoren verzichtet werden, wenn dem aus nematischen Flüssigkristallen mit positiver dielektrischer Anisotropie (als Wirt-Phase) und darin (als Gast-Phase) eingelagertem pleochroitischem Farbstoff zusammengesetzten Dielektrikum eine geringe Menge, z. B. 0,1-15 Gew.% eines optisch aktiven Materials zugesetzt wird, das im Flüssigkristall die Ausbildung einer schraubenförmigen Struktur (cholesterinische Struktur) bewirkt. Beispiele solcher Zusammensetzungen sowie die physikalischen Grundlagen der Lichtabsorption darin sind in der Arbeit von D. L. White und G. N. Taylor mit dem Titel « New Absorptive Mode Reflective Liquid Crystal Display Device » (J. Appl. Physics, Band 45 (1974), Seiten 4718-4723) beschrieben. Beispiele für Aufbau und Betrieb elektrooptischer Anzeigeelemente auf der Basis dieses Effekts sind in den DE-OS 2 639 675 und 2 658 568 beschrieben.

In der Literatur werden die Flüssigkristall-Anzeigeelemente mit cholesterinisch orientierter Wirt-Phase und darin eingebettetem Farbstoff als Gast-Phase vielfach als Cholesteric Guest-Host-Displays bezeichnet. Diese CGH-Anzeigeelemente haben sich als vorteilhaft erwiesen, weil sie ohne Polarisationsfolien einen guten Anzeigekontrast liefern und zudem eine größere Helligkeit der abgebildeten Zeichen aufweisen.

Es hat sich gezeigt, daß die Auswahl geeigneter Farbstoffe für CGH-Anzeigeelemente sehr schwierig ist : Zunächst müssen die dichroitischen Verhältniswerte solcher Systeme mit Wirt-Phase und darin eingebettetem Farbstoff als Gast-Phase genügend groß sein, um der Anzeigezelle eine ausreichende Helligkeit und ein ausreichendes Kontrastverhältnis zu verleihen. Dabei hängt der erzielbare Kontrast vom Ordnungsgrad S des Farbstoffes in der flüssigkristallinen Matrix ab. Für den Ordnungsgrad gilt die Beizehung

$$S = 1/2 \cdot < 3 \cos^2 R - 1 > = (E_{\parallel} - E_{\perp})/(E_{\parallel} + 2\, E_{\perp})$$

worin R den Winkel zwischen der Moleküllängsachse des Farbstoffmoleküls und der optischen Achse des Flüssigkristalls ist ; $E_{\parallel}$ und $E_{\perp}$ sind die Werte der Extinktion des Anzeigeelements, wenn die Messungen bei paralleler Orientierung ($E_{\parallel}$) bzw. senkrechter Orientierung ($E_{\perp}$) der Flüssigkristallmoleküle vorgenommen werden.

Ein für die alltägliche Praxis leichter zu handhabender Wert, der eine Aussage über den Ordnungsgrad S und damit über die technische Brauchbarkeit einer Farbstoff-Flüssigkristall-Kombination erlaubt, ist das sogenannte dichroitische Verhältnis V, das den Quotienten aus den vorstehend definierten Extinktionswerten darstellt :

$$V = E_{\parallel}/E_{\perp}$$

In technisch brauchbaren Farbstoff-Flüssigkristall-Kombinationen liegt der Wert von V bei 5 oder darüber.

Praktisch hängt der Ordnungsgrad eines Farbstoffs in erster Linie von seiner chemischen Struktur sowie von der Natur der flüssigkristallinen Matrix ab. Eine Anzahl von Beispielen hierfür ist von R. I. Cox in « Molecular Crystals and Liquid Crystals, Band 55 (1979), Seiten 1-33 » beschrieben.

Außer dem Ordnungsgrad bzw. dem dichroitischen Verhältnis sind aber für die Verwendung eines Farbstoffes in CGH-Anzeigeelementen noch andere Parameter wichtig : ein Absorptionsmaximum des

Farbstoffes muß im Bereich der sichtbaren Wellenlängen, d. h. zwischen 400 und 700 nm liegen und der Farbstoff muß in der dotierten Wirt-Phase bis zu einer Temperatur von etwa 100 °C beständig gegen Wechselspannungen von bis zu 20 V, gegen Strahlung im infraroten, sichtbaren und ultravioletten Bereich und gegen die Komponenten der flüssigkristallinen Wirt-Phase sein. Ferner sind eine gute Löslichkeit in der Wirt-Phase und eine hohe optische Dichte wünschenswert.

Die bisher für CGH-Anzeigeelemente vorgeschlagenen Farbstoffe erfüllen diese Anforderungen aber nicht in ausreichendem Maße. Insbesondere haben sich die in bezug auf das dichroitische Verhältnis und das Absorptionsmaximum an sich zweckmäßigen und zur Verwendung in CGH-Anzeigeelementen meist vorgeschlagenen Azofarbstoffe als ungenügend beständig gegen Licht bzw. Ultraviolett-Strahlung (zu geringe fotochemische Stabilität) und zum Teil auch als chemisch unbeständig erwiesen. Andererseits ist die im Vergleich zu Azofarbstoffen allgemein höhere fotochemische und chemische Stabilität von Anthrachinon-Farbstoffen bekannt und tatsächlich wurden in der Literatur auch Vorschläge zur Verwendung von Anthrachinon-Farbstoffen für CGH-Anzeigeelemente gemacht. Die meisten der bisher vorgeschlagenen Anthrachinon-Farbstoffe haben aber ein zu kleines dichroitisches Verhältnis V, um technisch einsetzbare CGH-Anzeigeelemente zu ermöglichen.

In der offengelegten britischen Patentanmeldung Nr. 20 11 940 werden substituierte Anthrachinonfarbstoffe der Formel (A) beschrieben,

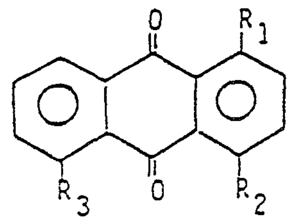

(A)

worin $R_1$ eine gegebenenfalls im Ring substituierte, über das Stickstoffatom gebundene Anilingruppe, $R_2$H oder OH und $R_3$H oder, wenn $R_2$H ist, ebenfalls eine gegebenenfalls substituierte Anilingruppe bedeutet. Das dichroitische Verhältnis dieser Anthrachinonfarbstoffe, gemessen in handelsüblichen Cyanobiphenyl/Cyanoterphenyl-Flüssigkristallmischungen, liegt zwischen 3,8 und 8,4, wobei die meisten Werte zwischen 5 und 6 liegen. Durch die Anilingruppen wird jedoch die Löslichkeit der Farbstoffe in den meisten gebräuchlichen flüssigkristallinen Wirt-Phasen verringert. Insbesondere in den heute in großem Umfang verwendeten flüssigkristallinen Basis-Materialien aus der Klasse der Phenylcyclohexane ist die Löslichkeit dieser Farbstoffe der Formel (A) für die Bedürfnisse der Praxis zu gering.

Der Erfindung liegt die Aufgabe zugrunde, dichroitische Farbstoffe zur Verfügung zu stellen, die in den handelsüblichen flüssigkristallinen Basismaterialien ausreichend gut löslich sind, zum Beispiel zu einer Mindestkonzentration von 0,5 Gew.%. Darüberhinaus sollen diese Farbstoffe ein dichroitisches Verhältnis von wenigstens V ≧ 5 haben und chemisch und photochemisch weitestgehend beständig sein.

Es wurde nun gefunden, daß die Naphthochinonfarbstoffe der Formel (I)

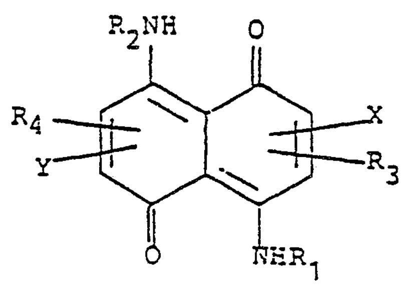

(I)

worin

X and Y gleich oder verschieden sind und Wasserstoff, Chlor oder Brom,

$R_1$, $R_2$, $R_3$ und $R_4$ Wasserstoff, Alkyl oder Alkoxyalkyl mit bis zu 8 C-Atomen oder eine zyklische Gruppe Z,

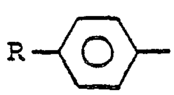 , 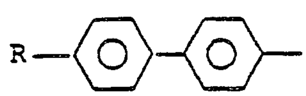 ,

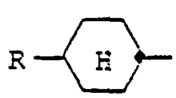 , 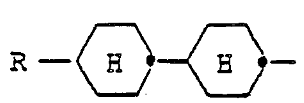 ,

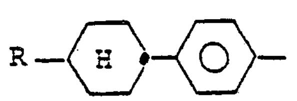 oder 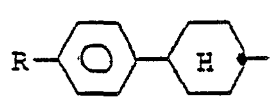 und

R Alkyl, Alkoxy, Alkoxyalkyl, Alkoxyalkoxy oder Alkanoyloxy mit bis zu 8 C-Atomen bedeuten, mit der Maßgabe, daß mindestens einer und höchstens zwei der Reste $R_1$, $R_2$, $R_3$ und $R_4$ eine zyklische Gruppe Z darstellen, wobei, wenn zwei zyklische Gruppen Z vorhanden sind, diese entweder für $R_1$ und $R_2$ oder für $R_3$ und $R_4$ stehen, und, wenn die Reste $R_3$ und $R_4$ zyklische Gruppen Z sind, diese in den 2- und 6- oder 3- und 7-Positionen des Naphthalingerüstes angeordnet sind, überraschend gut in den gebräuchlichen flüssigkristallinen Basismaterialien löslich sind und darin gute dichroitische Verhältniswerte (Ordnungsgrade) aufweisen.

Die Naphthochinonfarbstoffe der Formel (I) zeigen im wesentlichen grüne, blaugrüne, blaue und violette Grundfarben und sind daher eine wertvolle Ergänzung zu den für den gleichen Zweck verwendeten Anthrachinonfarbstoffen, zum Beispiel nach der DE-OS 30 28 593, die überwiegend rote, orange und gelbe Farbtöne aufweisen. Gegenstand der Erfindung sind daher flüssigkristalline Dielektrika für elektrooptische Anzeigeelemente mit einem Gehalt an einem oder mehreren pleochroitischen Farbstoffen, die dadurch gekennzeichnet sind, daß sie mindestens einen Naphthochinonfarbstoff der Formel (I) enthalten, sowie elektrooptische Anzeigeelemente auf der Basis der Guest-Host-Flüssigkristallzelle, die ein solches Dielektrikum enthalten. Naphthochinonfarbstoffe der Formel (Id),

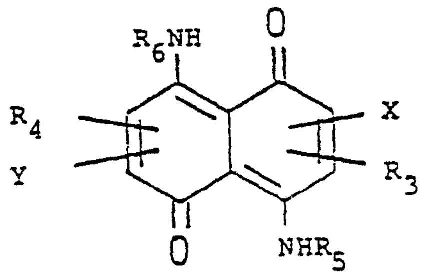

(Id)

worin

X and Y gleich oder verschieden sind und Wasserstoff, Chlor oder Brom,

$R_5$ und $R_6$ Wasserstoff, Alkyl oder Alkoxyalkyl mit bis zu 8 C-Atomen,

$R_3$ und $R_4$ eine zyklische Gruppe Z oder einer davon auch Wasserstoff bedeuten, wobei, wenn $R_3$ und $R_4$ Z bedeuten, diese Gruppen in den 2- und 6- oder 3- und 7-Positionen des Naphthochinongerüsts angeordnet sind, können als Komponente flüssigkristalliner Dielektrika für elektrooptische Anzeigeelemente angewendet werden.

In den Verbindungen der Formel (I) bedeuten die Substituenten X and Y Wasserstoff, Chlor oder Brom. Vorzugsweise ist dabei X = Y = Wasserstoff. Außerdem sind die Verbindungen der Formel (I) besonders gut geeignet, in denen einer dieser Substituenten Chlor oder Brom ist, wenn die benachbarte Gruppe ($R_3$ zu X bzw. $R_4$ zu Y) Wasserstoff ist. Wenn beide Substituenten X und Y Chlor oder Brom bedeuten, sind sie bevorzugt untereinander gleich ; in diesem Falle bedeuten $R_3$ und $R_4$ vorzugsweise Wasserstoff oder kurzkettiges unverzweigtes Alkyl, also Methyl, Ethyl, n-Propyl oder n-Butyl.

Von den Resten $R_1$, $R_2$, $R_3$ und $R_4$ bedeuten einer oder zwei eine zyklische Gruppe Z. Wenn zwei dieser Reste eine zyklische Gruppe Z bedeuten, sind dies entweder die beiden Reste $R_1$ und $R_2$, oder die beiden Reste $R_3$ Und $R_4$. Zyklische Gruppen Z im Sinne der vorliegenden Erfindung sind in 4-Stellung substituierte Phenyl- oder Cyclohexylringe ; dabei haben alle in den erfindungsgemäßen Verbindungen vorkommenden Cyclohexanringe die trans-Konfiguration ; in den Formelbildern ist dies durch die schwarze Markierung auf der jeweils rechten Seite des Cyclohexanringes kenntlich gemacht. Die Substituenten in der 4-Stellung der Phenyl- oder Cyclohexylringe können Alkylgruppen, Alkoxygruppen, Alkanoyloxygruppen, Alkoxyalkylgruppen oder Alkoxyalkoxygruppen mit jeweils bis zu 8 Kohlenstoffatomen, vorzugsweise mit 2 bis 6 Kohlenstoffatomen, oder wiederum durch eine dieser Gruppen in 4-Stellung substituierte Phenyl- oder Cyclohexylringe sein. Als zyklische Gruppen Z kommen somit die folgenden infrage : 4-(R)-Phenyl, trans-4-(R)-Cyclohexyl, 4'-(R)-Biphenyl-(4)-yl, 4-[trans-4-(R)-Cyclohexyl]-phenyl, trans-4[4-(R)-Phenyl]-cyclohexyl und trans-trans-4-[4-(R)-Cyclohexyl]-cyclohexyl. Unter diesen sind die folgenden wegen ihrer vergleichsweise leichten präparativen Zugänglichkeit besonders bevorzugt :

4-Alkylphenyl, 4-Alkoxyphenyl, 4-Alkanoyloxyphenyl,
4-Alkoxyalkylphenyl, 4-Alkoxyalkoxyphenyl ;
4-Alkylcyclohexyl ;
4'-Alkylbiphenyl-(4)-yl, 4'-Alkoxybiphenyl-(4)-yl,
4'-Alkanoyloxy-biphenyl-(4)-yl, 4'-Alkoxyalkylbiphenyl-(4)-yl ;
4-(trans-4-Alkylcyclohexyl)-phenyl, 4-(trans-4-Alkoxyalkylcyclohexyl)-phenyl ;
trans-4-(4-Alkylphenyl)-cyclohexyl, trans-4-(4-Alkoxyphenyl)-cyclohexyl, trans-4-(4-Alkanoyloxyphenyl)-cyclohexyl ;
trans-trans-4-(4-Alkylcyclohexyl)-cyclohexyl.

Die Substituenten R in der 4-Stellung der zyklischen Gruppen können geradkettig sein, also Methyl, Ethyl, n-Propyl, n-Butyl, n-Pentyl, n-Hexyl, N-Heptyl, n-Octyl, Methoxy, Ethoxy, n-Propyloxy, n-Butyloxy, n-Pentyloxy, n-Hexyloxy, n-Heptyloxy, n-Octyloxy, Acetoxy, Propionyloxy, n-Butyryloxy, n-Pentanoyloxy, n-Hexanoyloxy, n-Heptanoyloxy, n-Octanoyloxy, 2-Oxa-n-propyl, 2- oder 3-Oxa-n-butyl, 2-, 3- oder 4-Oxa-n-pentyl, 2-, 3-, 4- oder 5-Oxa-n-hexyl, 2-, 3-, 4-, 5- oder 6-Oxa-n-heptyl, 2-, 3-, 4-, 5-, 6- oder 7-Oxa-n-octyl, 2-Oxa-n-propyloxy, 2- oder 3-Oxa-n-butyloxy, 2-, 3- oder 4-Oxa-n-pentyloxy, 2-, 3-, 4- oder 5-Oxa-n-hexyloxy, 2-, 3-, 4-, 5- oder 6-Oxa-n-heptyloxy oder 2-, 3-, 4-, 5-, 6- oder 7-Oxa-n-octyloxy bedeuten ; wenn sie 3 oder mehr Kohlenstoffatome (bei Alkanoyloxygruppen 4 oder mehr Kohlenstoffatome) enthalten, können diese auch in verzweigter Kette angeordnet sein.

In der Regel hat jedoch in einem erfindungsgemäß eingesetzten Farbstoff nicht mehr als ein Rest R- und soweit von den Resten $R_1$, $R_2$, $R_3$ und $R_4$ einer oder mehrere Alkylgruppen oder Alkoxyalkylgruppen sind, auch diese — eine verzweigte Kohlenstoffkette, die in diesem Fall gewöhnlich auch nur einmal verzweigt ist. Bevorzugte Alkylgruppen sind die, in denen sich an einer längeren Kohlenstoffkette in 2- oder 3-Stellung eine Methyl- oder Ethylgruppe befindet, beispielsweise 2-Methylpropyl, 2-Methylbutyl, 3-Methylbutyl, 2-Methylpentyl oder 2-Ethyl-hexyl. Wenn eine Alkoxy- oder Alkanoyloxygruppe verzweigt ist, gelten diese Kriterien auch für den Alkylteil dieser Gruppen ; zusätzlich sind darin aber auch noch in 1-Stellung verzweigte Alkylteile interessant, so daß als Alkoxygruppen außer den von den vorstehend genannten Alkylgruppen abgeleiteten auch noch beispielsweise 1-Methylpropyloxy, 1-Methylbutyloxy, 1-Methylpentyloxy, 1-Methylhexyloxy oder 1-Methylheptyloxy von Bedeutung sind ; als verzweigte Alkanoyloxygruppen sind Isobutyryloxy und Isovaleryloxy von besonderem Interesse.

Die Naphthochinonfarbstoffe der Formel (I), in denen alle derartigen Kohlenstoffketten unverzweigt sind, sind in der praktischen Anwendung bevorzugt, weil sie gewöhnlich einen höheren Ordnungsgrad aufweisen ; Farbstoffe mit verzweigtkettigen Substituenten sind manchmal etwas besser löslich in einigen Flüssigkristall-Basismischungen ; im übrigen werden sie in der Regel nur verwendet, wo sie aufgrund der Kettenverzweigung dem flüssigkristallinen Dielektrikum zugleich optische Aktivität verleihen oder eine solche verstärken.

Bevorzugte flüssigkristalline Dielektrika nach der Erfindung sind die, die als Naphthochinonfarbstoffe solche der Formeln (Ia), (Ib), oder (Ic) enthalten,

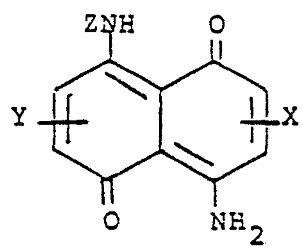

(Ia)

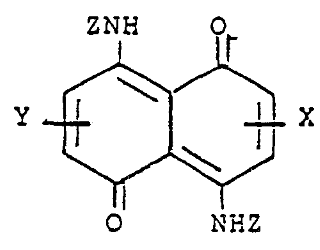

(Ib)

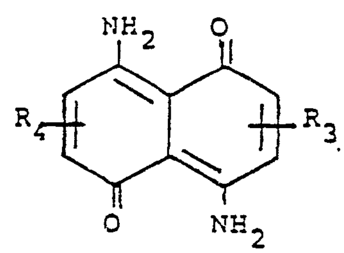

(Ic)

wobei darin X, Y, Z, $R_3$ und $R_4$ die in Formel (I) angegebene Bedeutung besitzen.

Die Verbindungen der Formel (I) werden in für diese Substanzklasse üblicher Weise hergestellt. So werden die Verbindungen der Formel (Ia) erhalten, indem ein gegebenenfalls halogeniertes 4,8-Diamino-1,5-naphthochinon der Formel (II)

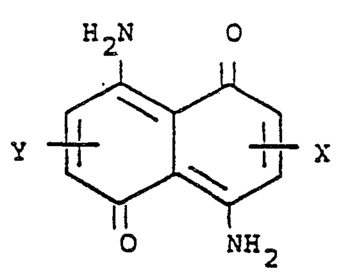

(II)

mit einem Amin $Z—NH_2$ im Molverhältnis von etwa 1 : 1 unter für derartige Umaminierungen bekannten Bedingungen umgesetzt wird. Die Umaminierungsreaktion mit einem aromatischen Amin $Z_{AR}—NH_2$ wird dabei zweckmäßig durch Erwärmen der Reaktionspartner in einem polaren Lösungsmittel, z. B., Essigsäure, Methanol, Ethanol, N,N-Dimethylformamid, Dimethylsulfoxid, ggf. in Gegenwart von geringen Mengen — bis zu 25 % — Wasser durchgeführt. Wenn das 4,8-Diamino-1,5-naphthochinon der Formel (II)

mit einem cycloaliphatischen Amin $Z_{cy}$—$NH_2$ umgesetzt wird, hat es sich als günstig erwiesen, das Naphthochinonderivat (II) zunächst in seine Leuko-Verbindung zu überführen, zum Beispiel durch Reduktion mit einem Zinn-(II)-salz, einem Sulfit oder einem Dithionit.

Die Leuko-Verbindung wird dann in der vorstehend beschriebenen Weise mit dem Amin $Z_{cy}$—$NH_2$ umgesetzt und das Reaktionsprodukt anschließend durch eine Oxidation in die Verbindung der Formel (Ia) umgewandelt; als Oxidationsmittel kommen alle für derartige Reaktionen üblicherweise verwendeten infrage; vorteilhaft wird, gegebenenfalls bei erhöhter Temperatur, Luft durch das Reaktionsgemisch geleitet.

Analog werden die Verbindungen der Formel (Ib) hergestellt, indem entweder eine Verbindung der Formel (Ia) in der vorstehend beschriebenen Weise mit einem Amin Z—$NH_2$ umgesetzt wird, oder indem eine Verbindung der Formel (II) mit etwa der zweifachen molaren Menge eines derartigen Amines umgesetzt wird. Bei der ersteren Route kann der Rest Z des in der zweiten Stufe verwendeten Amins der gleiche oder ein anderer als der des in der ersten Stufe verwendeten Amins sein. Gewöhnlich wird dieses zweistufige Verfahren nur angewandt, wenn solche Verbindungen der Formel (Ib) hergestellt werden sollen, in denen die beiden Reste Z verschieden sind. In analoger Weise können aus den Verbindungen der Formel (Ia) auch solche Verbindungen der Formel (I) hergestellt werden, in denen $R_1$ eine Alkyl- oder Alkoxy-alkylgruppe bedeutet: hierzu wird in der vorstehend beschriebenen Weise die Verbindung (Ia) zur Leukoverbindung reduziert, diese dann mit einem Alkyl- oder Alkoxyalkylamin umgesetzt und das Reaktionsprodukt wieder oxidiert. Für die Herstellung solcher Verbindungen (Ib), in denen die beiden Reste Z gleich sind, wird vorzugsweise das 4,8-Diamino-1,5-naphthochinon der Formel (II) mit etwa der zweifachen molaren Menge des Amins Z—$NH_2$ umgesetzt.

In der gleichen Weise wie die Verbindungen der Formeln (Ia) und (Ib) werden auch solche Verbindungen der Formel (I) hergestellt, die sonst den Verbindungen (Ia) bzw. (Ib) entsprechen, aber zusätzlich am Naphthochinon-Ringsystem noch durch eine oder zwei Alkyl- oder Alkoxyalkylgruppen substituiert sind; für die Herstellung dieser Verbindungen werden entsprechend substituierte Analogue der Verbindungen der Formel (II) als Ausgangsmaterial verwendet.

Die Verbindungen der Formel (Ic)

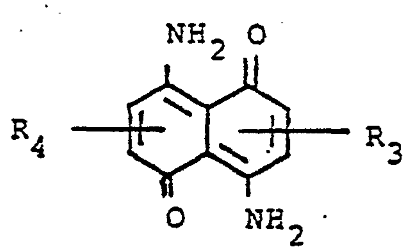

(Ic)

worin $R_3$ und/oder $R_4$ eine über einen aromatischen Ring an das Naphthochinongerüst gebundene Gruppe $Z_{AR}$ bedeuten, können hergestellt werden durch Arylierung solcher Verbindungen der Formel (II), in denen X und Y Wasserstoff bedeuten, mit aromatischen Diazoniumverbindungen $Z_{AR}$—$N\equiv N^+A^-$, wobei $A^-$ ein bei aromatischen Diazoniumsalzen üblicherweise eingesetztes Anion (z. B. $Cl^-$, $Br^-$, $SO_4^{2-}$, $BF_4^-$) darstellt. Die Diazoniumverbindungen $Z_{AR}$—$N\equiv N^+A^-$ werden in der Regel in Form ihrer wässerigen Lösungen nach den üblichen Verfahren aus den entsprechenden aromatischen Aminen $Z_{AR}$—$NH_2$ hergestellt und als solche mit den Verbindungen der Formel (II) bei Temperaturen von − 5° bis 40 °C zur Reaktion gebracht, wobei molekularer Stickstoff abgespalten wird und die zyklische Gruppe $Z_{AR}$ in die freie β-Position des Naphthalingerüstes eintritt. Durch geeignete Wahl der Mengenverhältnisse der Reaktionspartner (Molverhältnis 1 : 1 oder 1 : 2) können dabei die Verbindungen der Formel (Ic) erhalten werden, in denen eine oder beide Gruppen $R_3$ bzw. $R_4$ zyklische Reste $Z_{AR}$ bedeuten. Die Herstellung von Verbindungen der Formel (Ic) mit zwei voneinander verschiedenen Resten $Z_{AR}$ erfolgt in zwei aufeinanderfolgenden Arylierungsreaktionen mit entsprechend unterschiedlichen Diazoniumverbindungen $Z_{AR}$—$N\equiv N^+A^-$.

Die Verbindungen der oben definierten Formel Ic können auch hergestellt werden durch Umsetzung solcher Verbindungen der Formel (II), in denen X bzw. Y Chlor oder Brom bedeuten, mit Jodbenzolderivaten $Z_{AR}$—J unter den Bedingungen einer Ullmann-Reaktion, z. B. Erwärmen der Reaktionspartner in einem hochsiedenden polaren Lösungsmittel wie beispielsweise Nitrobenzol oder N,N-Dimethyl-formamid, oder in der Schmelze, in Gegenwart von Kupferpulver oder Nickel-Triphenylphosphin-Komplexen. Durch geeignete Wahl der Mengenverhältnisse der Reationsteilnehmer (Molverhältnis 1 : 1 oder 1 : 2) werden dabei dei Verbindungen der Formel (Ic) erhalten, in denen einer oder beide Gruppen $R_3$ bzw. $R_4$ zyklische Reste $Z_{AR}$ bedeuten. Die Synthese von Verbindungen der Formel (Ic) mit zwei voneinander verschiedenen Resten $Z_{AR}$ erfolgt in zwei aufeinanderfolgenden Ullmann-Reaktionen mit entsprechend unterschiedlichen Jodbenzolderivaten $Z_{AR}$—J.

Anstelle einer Verbindung der Formel (II) kann als Ausgangsmaterial für die Ullmann-Reaktion auch 1,5-Dinitro-2,6-(oder 3,7-)-dichlornaphthalin eingesetzt werden. Dabei wird zunächst ein Zwischenprodukt der Formel (III)

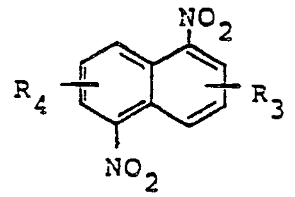

(III)

isoliert, das dann in für derartige Verbindungen bekannter Weise, zum Beispiel durch Behandlung mit Schwefelsesquioxid in eine Verbindung der Formel (Ic) übergeführt wird.

Die Verbindungen der Formel (Ic), worin $R_3$ und/oder $R_4$ eine über den Cyclohexanring an das Naphthochinonsystem gebundene Gruppe $Z_{cy}$ bedeuten, werden z. B. hergestellt durch Nitrierung von Naphthalinderivaten der Formel (IVa) bzw. (IVb).

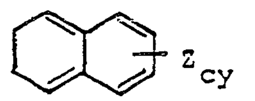

(IVa)

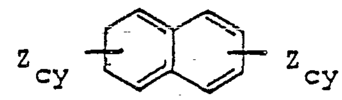

(IVb)

zu den entsprechenden 1,5-Dinitronaphthalinderivaten, die dann in der vorstehend beschriebenen Weise in die gewünschte Verbindung der Formel (Ic) umgewandelt werden. Ausgangsmaterialien der Formel (IVa) sind aus der DE-OS 2949080 bekannt, die der Formel (IVb) können in analoger Weise nach den dort beschriebenen Verfahren hergestellt werden.

Zur Herstellung solcher Verbindung der Formel (Ic), in denen einer der Reste $R_3$ Und $R_4$ eine Gruppe $Z_{cy}$ und der andere eine Gruppe $Z_{AR}$ bedeutet, wird zweckmäßig eine Verbindung der Formel (IVa) zunächst einer Ullmann-Reaktion mit einem Jodbenzolderivat $Z_{AR}$—J unterworfen und das dabei erhaltene Reaktionsprodukt über die 1,5-Dinitroverbindung in die gewünschte Verbindung der Formel (Ic) übergeführt.

Die Verbindungen der Formel (Id) werden, soweit sie nicht bereits von der vorstehend beschriebenen Formel (Ic) umfaßt sind, aus entsprechenden Verbindungen der Formel (Ic) oder während derer Synthese durchlaufenen Vorstufen hergestellt. So werden die Verbindungen der Formed (Id), worein $R_5$ und/oder $R_6$ Alkyl oder Alkoxyalkyl bedeuten, aus den entsprechenden Verbindungen der Formel (Ic) ($R_5 = R_6 = H$) durch Überführung in die Leuko-Verbindung, Umsetzung mit dem bzw. den Amin(en) $R_5$—$NH_2$ und/oder $R_6$—$NH_2$ und nachfolgende Oxidation erhalten. Zur Herstellung der Verbindungen der Formel (Id), in denen X und/oder Y Chlor oder Brom bedeuten, wird zweckmäßig eine Verbindung der Formel (III) in an sich bekannter Weise halogeniert und dann das Reaktionsprodukt wie vorstehend beschrieben in das Naphthochinonderivat umgewandelt, oder aber es wird eine Verbindung der Formel (II), in der X und/oder Y Chlor oder Brom bedeutet, in vorstehend beschriebener Weise mit einer aromatischen Diazoniumverbindung aryliert.

Die erfindungsgemäßen Dielektrika bestehen aus 2 bis 15, vorzugsweise 3 bis 12 Komponenten, darunter mindestens einem Naphthochinonfarbstoff der Formel (I). Die anderen Bestandteile werden ausgewählt aus den nematischen oder nematogenen Substanzen aus den Klassen der Azoxybenzole, Benzylidenaniline, Biphenyle, Terphenyle, Phenyl- oder Cyclohexylbenzoate, Cyclohexancarbonsäurephenyl- oder cyclohexylester, Phenylcyclohexane, Cyclohexylbiphenyle, Cyclohexylcyclohexane, Cyclohexylnaphthaline, 1,4-Bis-cyclohexylbenzole, 4,4'-Bis-cyclohexylbiphenyle, Phenyl- oder Cyclohexylpyrimidine, Phenyl- oder Cyclohexyldioxane, ggf. halogenierte Stilbene, Benzylphenylether, Tolane und substituierten Zimtsäuren. Die wichtigsten als Bestandteile flüssigkristalliner Wirt-Materialien infragekommenden Verbindungen lassen sich durch die Formel (V) charakterisieren,

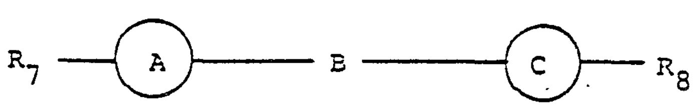

(V)

worin A und C je ein carbo- oder heterocyclisches Ringsystem aus der aus 1,4-disubstituierten Benzol- und Cyclohexanringen, 4,4'-disubstituierten Biphenyl-, Phenyl-cyclohexan- und Cyclohexylcyclohexansystemen, 2,5-disubstituierten Pyrimidin- und 1,3-Dioxanringen, 2,6-disubstituierten Naphthalin-, Di- und Tetrahydronaphthalin, Chinazolin und Tetrahydrochinazolin gebildeten Gruppe,

B —CH=CH—   —N(O)=N—
—CH=CD—   —CH=N(O)—
—C≡C—   —$CH_2$—$CH_2$—
—CO—O—   —$CH_2$—O—
—CO—S—   $CH_2$—S—
—CH=N—   —COO— 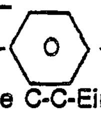 —COO—
—N=N—   oder eine C-C-Einfachbindung,

D Halogen, vorzugsweise Chlor, oder —CN, und $R_7$ und $R_8$ Alkyl, Alkoxy, Alkanoyloxy oder Alkoxycarbonyloxy mit bis zu 18, vorzugsweise bis zu 8 Kohlenstoffatomen, oder einer dieser Reste auch —CN, —NC, —$NO_2$, —$CF_3$, F, Cl oder Br bedeuten. Bei den meisten dieser Verbindungen sind $R_7$ und $R_8$ voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich.

Die erfindungsgemäßen Dielektrika enthalten in der Regel 0,1 bis 15, vorzugsweise 0,5 bis 10, insbesondere 1-5 Gewichtsprozent einer oder mehrerer Verbindungen der Formel (I). Die Herstellung der erfindungsgemäßen Dielektrika erfolgt in an sich üblicher Weise. In der Regel wird die gewünschte Menge der in geringerer Menge verwendeten Komponenten in der den Hauptbestandteil ausmachenden Komponente gelöst, zweckmäßig bei erhöhter Temperatur. Wenn dabei eine Temperatur oberhalb des Klärpunkts des Hauptbestandteils gewählt wird, kann die Vollständigkeit des Lösevorgangs besonders leicht beobachtet werden.

Durch geeignete Zusätze können die flüssigkristallinen Dielektrika nach der Erfindung so modifiziert werden, daß sie in allen bisher bekannt gewordenen Arten von Guest-Host-Azneigeelementen verwendet werden können. Derartige Zusätze sind dem Fachmann bekannt und sind in der einschlägigen Literatur ausführlich beschrieben. Beispielsweise können Substanzen zur veränderung der dielektrischen Anisotropie, der Viskosität der Leitfähigkeit und/oder der Orientierung der nematischen Phasen zugesetzt werden. Derartige Substanzen sind zum Beispiel in den DE-OS 22 09 127, 22 30 864, 23 21 632, 23 38 281 und 24 50 088 beschrieben.

Die folgenden Beispiele sollen die Erfindung erläutern, ohne sie zu begrenzen. In den Beispielen bedeuten F. den Schmelzpunkt und K. den Klärpunkt einer flüssigkristallinen Substanz in Grad Celsius ; Siedetemperaturen sind mit Kp. bezeichnet. Wenn nichts anderes gegeben ist, bedeuten angaben von Teilen oder Prozent Gewichtsteile bzw. Gewichtsprozent.

## Beispiel 1

Eine Suspension von 25 g 4-(trans-4-n-Propylcyclohexyl)-anilin-hydrochlorid in 250 ml 5 %iger wäßriger Natronlauge und 420 ml Toluol wird bei 90° 30 Minuten kräftig gerührt. Nach Abkühlen auf 20° wird die organische Phase abgetrennt, eingedampft und der Rückstand in eine siedende Lösung von 9,4 g 4,8-Diamino-1,5-naphthochinon in 100 ml Essigsäure getropft. Das Reaktionsgemisch wird 6 Stunden zum Sieden erhitzt, danach in 1 000 ml Wassergegossen, das ausgefallene 4,8-Bis-[4-(trans-4-n-propyl-cyclohexyl)-anilino-]-1,5-naphthochinon abfiltriert und aus Dichlormethan umkristallisiert : F. 261°.

Analog werden hergestellt :

4,8-Bis-[4-(trans-4-ethylcyclohexyl)-anilino]-1,5-naphthochinon,
4,8-Bis-[4-(trans-4-n-butylcyclohexyl)-anilino]-1,5-naphthochinon,
4,8-Bis-[4-(trans-4-n-pentylcyclohexyl)-anilino]-1,5-naphthochinon,
4,8-Bis-(4-ethylanilino)-1,5-naphthochinon, F. 232°,
4,8-Bis-(4-n-propylanilino)-1,5-naphthochinon,
4,8-Bis-(4-n-butylanilino)-1,5-naphthochinon,F. 164°,
4,8-Bis-(4-n-pentylanilino)-1,5-naphthochinon,
4,8-Bis-(4-n-hexylanilino)-1,5-naphthochinon, F. 151°,
4,8-Bis-(4-methoxyanilino)-1,5-naphthochinon,
4,8-Bis-(4-ethoxyanilino)-1,5-naphthochinon, F. 260°,
4,8-Bis-(4-n-propyloxyanilino)-1,5-naphthochinon,
4,8-Bis-(4-n-butyloxyanilino)1,5-naphthochinon,
4,8-Bis-(4-n-pentyloxyanilino)-1,5-naphthochinon,
4,8-Bis-(4-n-hexyloxyanilino)-1,5-naphthochinon, F. 166°,
4,8-Bis-(4-n-heptyloxyanilino)-1,5-naphthochinon, F. 163°,
4,8-Bis-(4-n-octyloxyanilino)-1,5-naphthochinon, F. 164°,
4,8-Bis-[4-(3-oxabutyloxy)-anilino]-1,5-naphthochinon, F. 191°,
4,8-Bis-[4-(3-oxapentyloxy)-anilino]-1,5-naphthochinon,
4,8-Bis-(trans-4-ethylcyclohexylamino)-1,5-naphthochinon,
4,8-Bis-(trans-4-n-propylcyclohexylamino)-1,5-naphthochinon,
4,8-Bis-(trans-4-n-butylcyclohexylamino)-1,5-naphthochinon,
4,8-Bis-(trans-4-n-pentylcyclohexylamino)-1,5-naphthochinon,
4,8-Bis-(trans-4-n-hexylcyclohexylamino)-1,5-naphthochinon,
4,8-Bis-(trans-4-n-heptylcyclohexylamino)-1,5-naphthochinon.

## Beispiel 2

Zu einer Lösung von 9,4 g 4,8-Diamino-1,5-naphthochinon in 100 ml 90% Essigsäure werden bei 90° 10,8 g 4-(trans-4-n-Propylcyclohexyl)-anilin getropft und das Reaktionsgemisch bei dieser Temperatur 6

Stunden gerührt. Anschließend wird das Reaktionsgemisch nach Abkühlen auf Raumtemperatur in 1 000 ml Wasser gegossen, das ausgefallene 4-(trans-4-n-Propylcyclohexyl)-anilino-8-amino-1,5-naphthochinon abfiltriert und aus Eisessig umkristallisiert ; F. 199°.

Analog werden hergestellt :

4-(trans-4-Ethylcyclohexyl)-anilino-8-amino-1,5-naphthochinon,
4-(trans-4-n-Butylcyclohexyl)-anilino-8-amino-1,5-naphthochinon,
4-(trans-4-n-Pentylcyclohexyl)-anilino-8-amino-1,5-naphthochinon,
4-(4-Ethylanilino)-8-amino-1,5-napthochinon,
4-(4-n-Propylanilino)-8-amino-1,5-naphthochinon,
4-(4-n-Butylanilino)-8-amino-1,5-naphthochinon,
4-(4-n-Pentylanilino)-8-amino-1,5-naphthochinon,
4-(4-n-Hexylanilino)-8-amino-1,5-naphthochinon,
4-(4-Methoxyanilino)-8-amino-1,5-naphthochinon,
4-(4-Ethoxyanilino)-8-amino-1,5-naphthochinon,
4-(4-n-Propyloxyanilino)-8-amino-1,5-naphthochinon,
4-(4-n-Butyloxyanilino)-8-amino-1,5-naphthochinon,
4-(4-n-Pentyloxyanilino)-8-amino-1,5-naphthochinon,
4-(4-n-Hexyloxyanilino)-8-amino-1,5-naphthochinon,
4-(4-n-Heptyloxyanilino)-8-amino-1,5-naphthochinon,
4-(4-n-Octyloxyanilino)-8-amino-1,5-naphthochinon,
4-[4-(3-Oxabutyloxy)-anilino]-8-amino-1,5-naphthochinon,
4-[4-(3-Oxapentyloxy)-anilino]-8-amino-1,5-naphthochinon,
4-(trans-4-Ethylcyclohexylamino)-8-amino-1,5-naphthochinon,
4-(trans-4-n-Propylcyclohexylamino)-8-amino-1,5-naphthochinon,
4-(trans-4-n-Butycyclohexylamino)-8-amino-1,5-naphthochinon,
4-(trans-4-n-Pentylcyclohexylamino)-8-amino-1,5-naphthochinon,
4-(trans-4-n-Hexylcyclohexylamino)-8-amino-1,5-naphthochinon,
4-(trans-4-n-Heptylcyclohexylamino)-8-amino-1,5-naphthochinon,
4-(4'-Ethylbiphenyl-4-ylamino)-8-amino-1,5-naphthochinon,
4-(4'-n-Butylbiphenyl-4-ylamino)-8-amino-1,5-naphthochinon,
4-(4'-n-Pentylbiphenyl-4-ylamino)-8-amino-1,5-naphthochinon,
4-(4'-n-Hexylbiphenyl-4-ylamino)-8-amino-1,5-naphthochinon,
4-(4'-n-Heptylbiphenyl-4-ylamino)-8-amino-1,5-naphthochinon,
4-(4'-Ethoxybiphenyl-4-ylamino)-8-amino-1,5-naphthochinon,
4-(4'-n-Propyloxybiphenyl-4-ylamino)-8-amino-1,5-naphthochinon,
4-(4'-n-Pentyloxybiphenyl-4-ylamino)-8-amino-1,5-naphthochinon,
4-(4'-Octyloxybiphenyl-4-ylamino)-8-amino-1,5-naphthochinon.

## Beispiel 3

Zu einer Lösung von 5 g 2,6-Dibrom-4,8-diamino-1,5-naphthochinon in 100 ml N,N-Dimethylformamid werden bei Raumtemperatur 13,7 g 4-n-Hexyloxyjodbenzol und 2,9 g Kupferpulver gegeben. Das Reaktionsgemisch wird unter einer Stickstoffatmosphäre 50 Minuten unter Rühren auf 100° erwärmt, danach auf Raumtemperatur abgekühlt und in 1 000 ml Wasser eingerührt. Der entstehende Niederschlag wird abfiltriert, getrocknet und mit 200 ml Aceton extrahiert. Der Extrakt wird eingedampft und das zurückbleibende 2,6-Bis-(4-n-hexyloxyphenyl)-4,8-diamino-1,5-naphthochinon durch Chromatographie an Kieselgel (Eluens : Dichlormethan) gereinigt ; F. 168°.

Analog werden hergestellt :

2,6-Bis-(4-methylphenyl)-4,8-diamino, 1,5-naphthochinon,
2,6-Bis-(4-ethylphenyl)-4,8-diamino-1,5-naphthochinon,
2,6-Bis-(4-n-propylphenyl)-4,8-diamino-1,5-naphthochinon,
2,6-Bis-(4-n-butylphenyl)-4,8-diamino-1,5-naphthochinon,
2,6-Bis-(4-pentylphenyl)-4,8-diamino-1,5-naphthochinon,
2,6-Bis-(4-n-hexylphenyl)-4,8-diamino-1,5-naphthochinon,
2,6-Bis-(4-methoxyphenyl)-4,8-diamino-1,5-naphthochinon,
2,6-Bis-(4-ethoxyphenyl)-4,8-diamino-1,5-naphthochinon,
2,6-Bis-(4-n-propyloxyphenyl)-4,8-diamino-1,5-naphthochinon,
2,6-Bis-(4-n-butyloxyphenyl)-4,8-diamino-1,5-naphthochinon,
2,6-Bis-(4-n-pentyloxyphenyl)-4,6-diamino-, 1,5-naphthochinon.

Beispiel 4

Eine Suspension von 14,9 g 4-n-Butylanilin in 55 ml 17 %iger wässriger Salzsäure wird bei 5° mit einer Lösung von 7,3 g Natriumnitrit in 75 ml Wasser diazotiert und überschüssiges Natriumnitrit durch Zugabe von Amidosulfonsäure entfernt. Die so erhaltene klare Diazoniumsalz-lösung wird bei 5-10° zu einer Lösung von 18,1 g 4,8-Diamino-1,5-naphthochinon in 300 ml N,N-Dimethylformamid getropft und anschließend das Reaktionsgemisch 5 Tage bei 15° gerührt. Danach wird das Reaktionsgemisch in 2 000 ml Wasser gegossen, das ausgefallene 2-(4-n-Butylphenyl)-4,8-diamino-1,5-naphthochinon abfiltriert und aus Aceton umkristallisiert ; F. 201°.

Analog werden hergestellt :

2-(4-Methylphenyl)-4,8-diamino-1,5-naphthochinon,
2-(4-Ethylphenyl)-4,8-diamino-1,5-naphthochinon,
2-(4-n-Propylphenyl)-4,8-diamino-1,5-naphthochinon,
2-(4-n-Pentylphenyl)-4,8-diamino-1,5-naphthochinon,
2-(4-n-Hexylphenyl)-4,8-diamino-1,5-naphthochinon,
2-(4-n-Heptylphenyl)-4,8-diamino-1,5-naphthochinon,
2-(4-Methoxyphenyl)-4,8-diamino-1,5-naphthochinon,
2-(4-Ethoxyphenyl)-4,8-diamino-1,5-naphthochinon,
2-(4-n-Propyloxyphenyl)-4,8-diamino-1,5-naphthochinon,
2-(4-n-Butyloxyphenyl)-4,8-diamino-1,5-naphthochinon,
2-(4-n-Pentyloxyphenyl)-4,8-diamino-1,5-naphthochinon,
2-(4-n-Hexyloxyphenyl)-4,8-diamino-1,5-naphthochinon,
2-[4-(trans-4-Ethylcyclohexyl)-phenyl]-4,8-diamino-1,5-naphthochinon,
2-[4-(trans-4-n-Propylcyclohexyl)-phenyl]-4,8-diamino-1,5-naphthochinon, F. 300°,
2-[4-(trans-4-n-Butylcyclohexyl)-phenyl]-4,8-diamino-1,5-naphthochinon,
2-[4-(trans-4-n-Pentylcyclohexyl)-phenyl]-4,8-diamino-1,5-naphthochinon,
2-[4-(trans-4-n-Hexylcyclohexyl)-phenyl]-4,8-diamino-1,5-naphthochinon.

Beispiel 5

Ein flüssigkristallines Dielektrikum aus

24 % 4-(trans-4-n-Propylcyclohexyl)-benzonitril,
36 % 4-(trans-4-n-Pentylcyclohexyl)-benzonitril,
25 % 4-(trans-4-n-Heptylcyclohexyl)-benzonitril und
15 % 4-(trans-4-n-Pentylcyclohexyl)-4'-cyanobiphenyl

wird mit 1,0 % 4,8-Bis-(4-methoxyanilino)-1,5-naphthochinon versetzt. Das erhaltene Dielektrikum zeigt eine grüne Farbe mit einem Extinktionsmaximum bei 670 nm. Der Ordnungsgrad des Farbstoffs beträgt 0,701.

Beispiel 6

In einem flüssigkristallinen Dielektrikum aus
22 % 4-(trans-4-n-Propylcyclohexyl)-benzonitril,
19 % 4-(trans-4-n-Butylcyclohexyl)-benzonitril,
30 % 4-(trans-4-n-Pentylcyclohexyl)-benzonitril,
15 % 4-(trans-4-n-Pentylcyclohexyl)-4'-cyanobiphenyl und
14 % 4-n-Pentyl-4'-cyano-p-terphenyl

ist der Farbstoff 4,8-Bis-(4-ethoxyanilino)-1,5-naphthochinon bei 0° (!) zu 0,1 % löslich. Das erhaltene Dielektrikum zeigt eine grüne Farbe mit einem Extinktionsmaximum bei 675 nm.
Der Ordnungsgrad des Farbstoffs beträgt 0,73.

Beispiel 7

In dem in Beispiel 6 genannten Basis-Dielektrikum ist der Farbstoff 4,8-Bis-(4-n-butylanilino)-1,5-naphthochinon bei 0° zu 0,8 % löslich. Das Dielektrikum zeigt eine grüne Farbe mit einem Extinktionsmaximum bei 670 nm. Der Ordnungsgrad des Farbstoffs beträgt 0,69.

Beispiel 8

In dem in Beispiel 6 genannten Basis-Dielektrikum ist der Farbstoff 4-(trans-4-n-Propylcyclohexyl)-anilino-8-amino-1,5-naphthochinon bei 20° zu 1,8 % löslich. Das erhaltene Dielektrikum zeigt eine blaue Farbe mit einem Extinktionsmaximum bei 635 nm. Der Ordnungsgrad des Farbstoffs beträgt 0,67.

Beispiel 9

In dem in Beispiel 6 genannten Basis-Dielektrikum ist der Farbstoff 4,8-Bis-(4-n-heptyloxyanilino)-1,5-naphthochinon bei 0° zu 1,1 % löslich. Das erhaltene Dielektrikum zeigt eine grüne Farbe mit einem Extinktionsmaximum bei 675 nm. Der Ordnungsgrad des Farbstoffs beträgt 0,74.

Beispiel 10

In dem in Beispiel 6 genannten Basis-Dielektrikum ist der Farbstoff 4,8-Bis-(4-n-hexyloxyanilino)-1,5-naphtochinon bei 0° zu 0,8 % löslich. Das erhaltene Dielektrikum zeigt eine grüne Farbe mit einem Extinktionsmaximum bei 675 nm. Der Ordnungsgrad des Farbstoffs beträgt 0,74.

Beispiel 11

In dem in Beispiel 5 genannten Basis-Dielektrikum ist der Farbstoff 4,8-Diamino-2,6-bis-(4-n-hexyloxyphenyl)-1,5-naphthochinon bei 20° zu 2,5 % löslich. Das erhaltene Dielektrikum zeigt eine grüne Farbe mit einem Extinktionsmaximum bei 675 nm. Der Ordungsgrad des Farbstoffs beträgt 0,77.

**Ansprüche**

1. Flüssigkristallines Dielektrikum mit einem Gehalt an einem oder mehreren pleochroitischen Farbstoffen für elektrooptische Anzeigeelemente, dadurch gekennzeichnet, daß es mindestens einen Farbstoff der Formel (I) enthält,

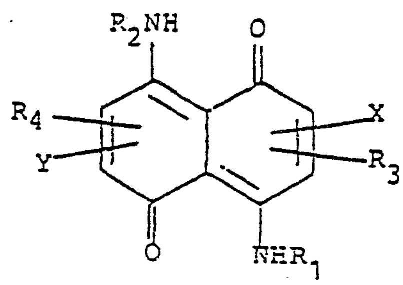

(I)

worin

X und Y gleich oder verschieden sind und Wasserstoff, Chlor oder Brom,

$R_1$, $R_2$, $R_3$ und $R_4$ Wasserstoff, Alkyl oder Alkoxyalkyl mit bis zu 8 C-Atomen oder eine zyklische Gruppe Z,

Z

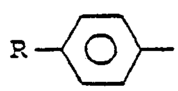 , 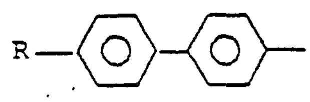 ,

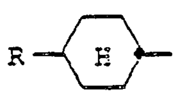 , 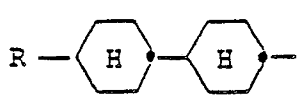 ,

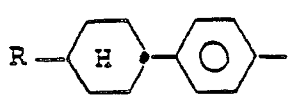 oder 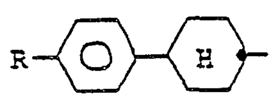 und

R Alkyl, Alkoxy, Alkoxyalkyl, Alkoxy-alkoxy oder Alkanoyloxy mit bis zu 8 C-Atomen bedeuten, mit der Maßgabe, daß mindestens einer und höchstens zwei der Reste $R_1$, $R_2$, $R_3$ und $R_4$ eine zyklische Gruppe Z darstellen, wobei, wenn zwei zyklische Gruppen Z vorhanden sind, diese entweder für $R_1$ und $R_2$ oder für $R_3$ und $R_4$ stehen, und, wenn die Reste $R_3$ und $R_4$ zyklische Gruppen Z sind, diese in den 2- und 6- oder 3- und 7-Positionen des Naphthalingerüstes angeordnet sind.

2. Flüssigkristallines Dielektrikum nach Anspruch 1, dadurch gekennzeichnet, daß der Farbstoff ein Naphthochinonderivat der Formel (Ia) oder (Ib) ist,

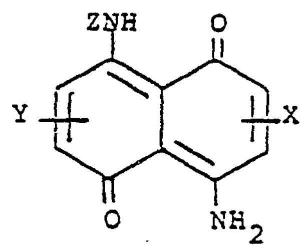 (Ia) 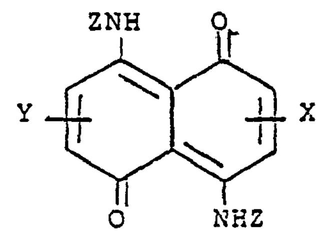 (Ib)

worin X, Y und Z die in Anspruch 1 angegebene Bedeutung besitzen.

3. Flüssigkristallines Dielektrikum nach Anspruch 1, dadurch gekennzeichnet, daß der Farbstoff ein Naphthochinonderivat der Formel (Ic) ist

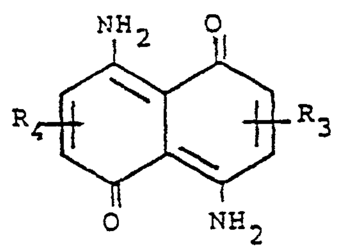 (Ic)

worin $R_3$ und $R_4$ die in Anspruch 1 angegebene Bedeutung besitzen.

4. Verwendung einer Verbindung der Formel (I)

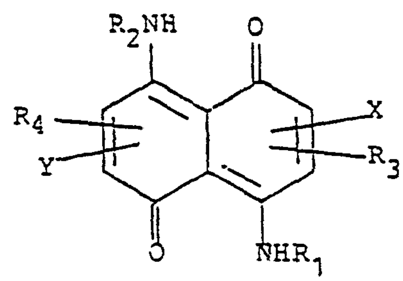 (I)

worin

X und Y gleich oder verschieden sind un Wasserstoff, Chlor oder Brom,

$R_1$, $R_2$, $R_3$ und $R_4$ Wasserstoff, Alkyl oder Alkoxyalkyl mit bis zu 8 C-Atomen oder eine zyklische Gruppe Z,

Z 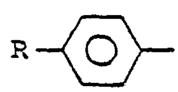 , 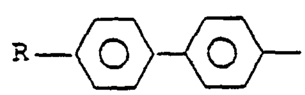 ,

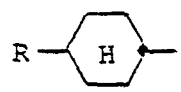 , 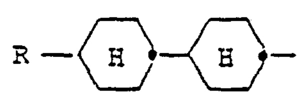 ,

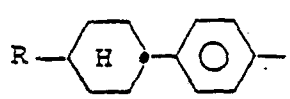 oder 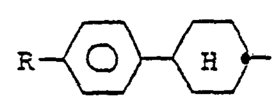 und

R Alkyl, Alkoxy, Alkoxyalkyl, Alkoxyalkoxy oder Alkanoyloxy mit bis zu 8 C-Atomen bedeuten, mit der Maßgabe, daß mindestens einer und höchstens zwei der Reste $R_1$, $R_2$, $R_3$ und $R_4$ eine zyklische Gruppe Z darstellen, wobei, wenn zwei zyklische Gruppen Z vorhanden sind, diese entweder für $R_1$ und $R_2$ oder für $R_3$ und $R_4$ stehen, und, wenn die Reste $R_3$ und $R_4$ zyklische Gruppen Z sind, diese in den 2- und 6- oder 3- und 7-Positionen des Naphthalingerüstes angeordnet sind, als Komponente eines flüssigkristallinen Dielektrikums für elektrooptische Anzeigeelemente.

5. Elektrooptisches Anzeigeelement auf der Basis einer Guest-Host-Flüssigkristallzelle, dadurch gekennzeichnet, daß es ein flüssigkristallines Dielektrikum nach Anspruch 1 enthält.

**Claims**

1. Liquid crystalline dielectric with a content of one or more pleochroitic dyestuffs for electro-optical indicator elements, characterised in that it contains at least one dyestuff of the formula (I),

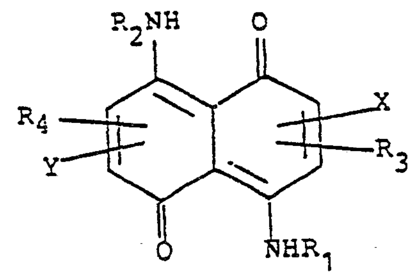

(I)

wherein

X and Y are the same or different and signify hydrogen, chlorine or bromine,

$R_1$, $R_2$, $R_3$ and $R_4$ signify hydrogen, alkyl or alkoxyalkyl with up to 8 C-atoms or a cyclic group Z,

Z signifies

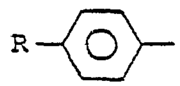 , 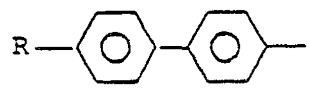

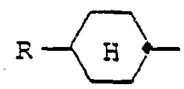 , 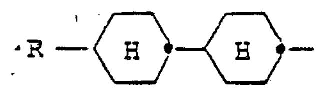

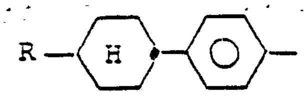 or 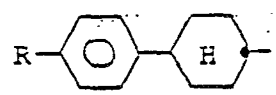

and R signifies alkyl, alkoxy, alkoxyalkyl, alkoxyalkoxy or alkanoyloxy with up to 8 C-atoms, with the proviso that at least one and at most two of the residues $R_1$, $R_2$, $R_3$ and $R_4$ represents a cyclic group Z, whereby, when two cyclic groups Z are present, these stand either for $R_1$ and $R_2$ or for $R_3$ and $R_4$ and, when the residues $R_3$ and $R_4$ are cyclic groups Z, these are arranged in the 2- and 6- or 3- and 7-positions of the naphthalene structure.

2. Liquid crystalline dielectric according to claim 1, characterised in that the dyestuff is a naphthoquinone derivative of the formula (Ia) or (Ib),

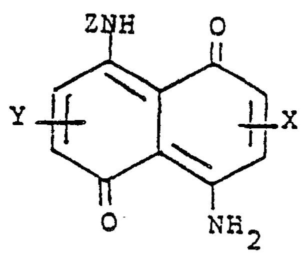 (Ia) 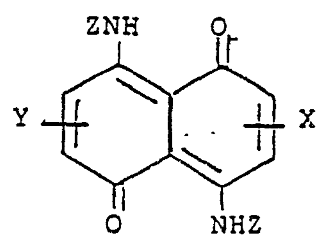 (Ib)

wherein X, Y and Z possess the meaning given in claim 1.

3. Liquid crystalline dielectric according to claim 1, characterised in that the dyestuff is a naphthoquinone derivative of the formula (Ic),

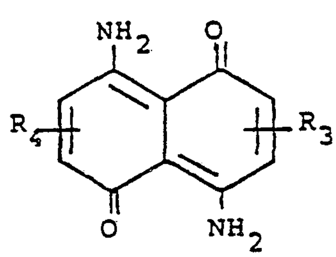 (Ic)

wherein $R_3$ and $R_4$ possess the meaning given in claim 1.

4. Use of a compound of the formula (I)

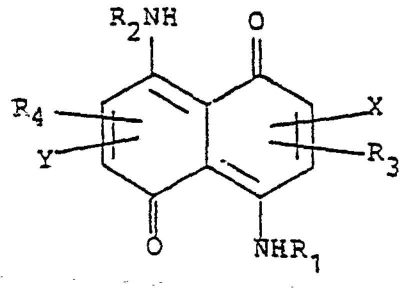

(I)

wherein

X and Y are the same or different and signify hydrogen, chlorine or bromine,

$R_1$, $R_2$, $R_3$ and $R_4$ signify hydrogen, alkyl or alkoxyalkyl with up to 8 C-atoms or a cyclic group Z,

Z signifies

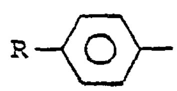 , 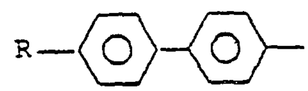

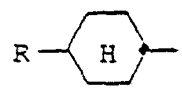 , 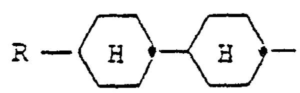

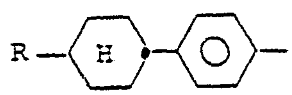 or 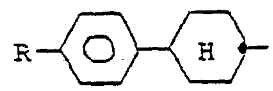

and R signifies alkyl, alkoxy, alkoxyalkyl, alkoxyalkoxy or alkanoyloxy with up to 8 C-atoms, with the proviso that a least one and at most two of the residues $R_1$, $R_2$, $R_3$ and $R_4$ represents a cyclic group Z, whereby, when two cyclic groups Z are present, these stand either for $R_1$ and $R_2$ or for $R_3$ and $R_4$ and, when the residues $R_3$ and $R_4$ are cyclic groups Z, these are arranged in the 2- and 6- or 3- and 7-positions of the naphthalene structure, as component of a liquid crystalline dielectric for electro-optical indicator elements.

5. Electro-optical indicator element based upon a guest-host liquid crystal cell, characterised in that it contains a liquid crystalline dielectric according to claim 1.

**Revendications**

1. Diélectrique à cristaux liquides contenant un ou plusieurs colorants pléochroïques pour dispositifs d'affichage électrooptiques, caractérisé en ce qu'il contient au moins un colorant de formule (I)

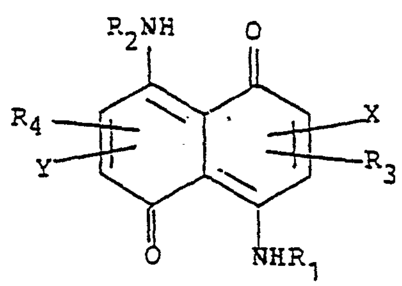

(I)

ou

X et Y sont semblables ou différents et représentent un hydrogène, un chlore ou un brome,

$R_1$, $R_2$, $R_3$ et $R_4$ représentent un hydrogène, un alcoyle ou un alcoxyalcoyle ayant jusqu'à 8 atomes de carbone ou un groupe cyclique Z,

Z représente

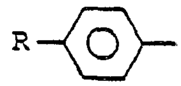 , 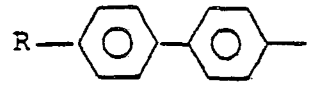 ,

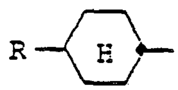 , 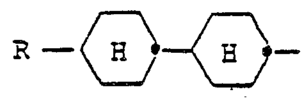 ,

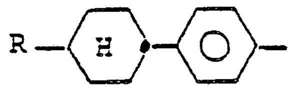 ou 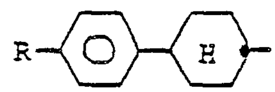 et

R représente un alcoyle, un alcoxy, un alcoxyalcoyle, un alcoxyalcoxy ou un alcanoyloxy ayant jusqu'à 8 atomes de carbone,

avec la précision qu'au moins un et au plus deux des radicaux $R_1$, $R_2$, $R_3$ et $R_4$ représente(nt) un groupe cyclique Z où, lorsque deux groupes cycliques Z sont présents, ceux-ci représentent soit $R_1$ et $R_2$, soit $R_3$ et $R_4$ et, lorsque les radicaux $R_3$ et $R_4$ sont des groupes cycliques Z, ceux-ci sont disposés dans les positions 2 et 6 ou 3 et 7 du squelette naphtalène.

2. Diélectrique à cristaux liquides selon la revendication 1, caractérisé en ce que le colorant est un dérivé de naphtoquinone de formule (Ia) ou (Ib)

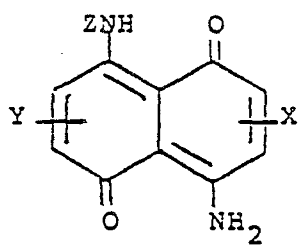 (Ia) 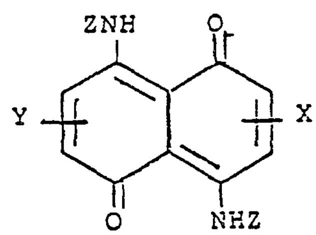 (Ib)

où X, Y et Z ont la signification donnée dans la revendication 1.

3. Diélectrique à cristaux liquide selon la revendication 1, caractérisé en ce que le colorant est un dérivé de naphtoquinone de formule (Ic)

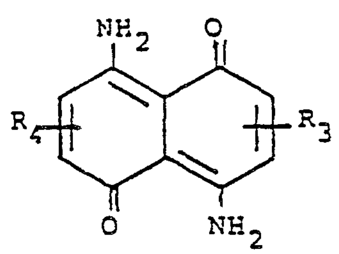 . (Ic)

où $R_3$ et $R_4$ ont la signification donnée dans la revendication 1.

4. Application d'un composé de formule (I)

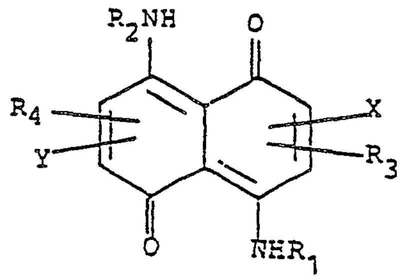 (I)

où

X et Y sont semblables ou différents et représentent un hydrogène, un chlore ou un brome,

$R_1$, $R_2$, $R_3$ et $R_4$ représentent un hydrogène, un alcoyle ou un alcoxyalcoyle ayant jusqu'à 8 atomes de carbone ou un groupe cyclique Z,

Z représente

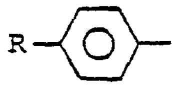 , 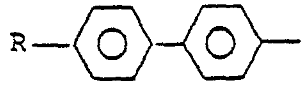 ,

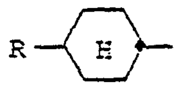 , 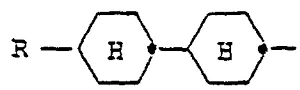 ,

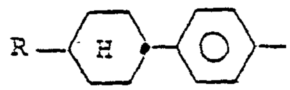 ou 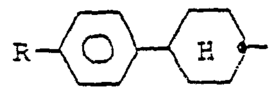 et

R représente un alcoyle, un alcoxy, un alcoxyalcoyle, un alcoxyalcoxy ou un alcanoyloxy ayant jusqu'à 8 atomes de carbone, avec la précision qu'au moins un et au plus deux des radicaux $R_1$, $R_2$, $R_3$ et $R_4$ représente(nt) un groupe cyclique Z où, lorsque deux groupes cycliques Z sont présents, ceux-ci représentent soit $R_1$ et $R_2$, soit $R_3$ et $R_4$, et, lorsque les radicaux $R_3$ et $R_4$ sont des groupes cycliques Z, ceux-ci sont disposés dans les positions 2 et 6 ou 3 et 7 du squelette naphtalène, comme composant d'un diélectrique à cristaux liquides pour éléments d'affichage électrooptiques.

5. Dispositif d'affichage électrooptique à base d'une cellule à cristaux liquides Guest-Host, caractérisé en ce qu'il contient un diélectrique à cristaux liquides selon la revendication 1.